# EUROPÄISCHE PATENTANMELDUNG

(11) **EP 1 227 202 A1**
(43) Veröffentlichungstag der Anmeldung: **31.07.2002**
(21) Anmeldenummer: 02001208.4
(22) Anmeldetag: 17.01.2002
(51) Int. Cl.: E04F 17/02, F23J 13/04, F16L 27/11

(54) **Abgasanlage mit Mehrfachbelegung**

(30) Priorität: 26.01.2001 DE 10103385
(71) Anmelder: Skoberne, Willi, D-64342 Seeheim-Jugenheim (DE)
(72) Erfinder: Skoberne, Willi, D-64342 Seeheim-Jugenheim (DE)
(74) Vertreter: Katscher, Helmut, Dipl.-Ing.

(57) **Zusammenfassung**

Eine Abgasanlage für Gebäude ist zur Mehrfachbelegung durch mehrere, in unterschiedlichen Stockwerken angeschlossene Brenngeräte (1) bestimmt. Die Abgasanlage weist einen aus Kunststoff bestehenden Abgasleitungsstrang (4) auf, der in einem Leitungsschacht (2) des Gebäudes angeordnet ist. der Abgasleitungsstrang (4) weist mehrere Anschlußformstücke (7) auf, an denen jeweils ein Brenngerät (1) angeschlossen ist. Zwischen aufeinander folgenden Anschlußformstücken (7) ist jeweils ein flexibler Faltenbalgkompensator (11) im Abgasleitungsstrang (4) angeordnet, der Wärmedehnungen und Montagetoleranzen ausgleicht.

## Beschreibung

Die Erfindung betrifft eine Abgasanlage für Gebäude mit Mehrfachbelegung durch mehrere, in unterschiedlichen Stockwerken angeschlossene Brenngeräte, mit einem aus Kunststoff bestehenden, in einem Leitungsschacht des Gebäudes angeordneten Abgasleitungsstrang, der mehrere Anschlußformstücke zum Anschluß jeweils eines Brenngeräts und mehrere, jeweils zwischen zwei Anschlußformstücken angeordnete Leitungsrohrabschnitte aufweist.

Derartige Abgasanlagen dienen dazu, die von mehreren Brenngeräten, beispielsweise Heizungskesseln, in unterschiedlichen Stockwerken des Gebäudes anfallenden Abgase abzuführen. Hierzu sind die Brenngeräte an einen gemeinsamen Abgasleitungsstrang angeschlossen, der konzentrisch in einem Leitungsschacht des Gebäudes mit allseitigem Abstand zu den Schachtinnenwänden angeordnet ist. Der zwischen dem Abgasleitungsstrang und den Schachtinnenwänden gebildete Mantelraum dient zur Zufuhr von Zuluft zu den einzelnen Brenngeräten.

Herkömmlicherweise ist der Abgasleitungsstrang als starre Rohrleitung aus Kunststoff ausgeführt, die an der Anschlußstelle jedes Brenngeräts ein üblicherweise als T-Stück ausgeführtes Anschlußformstück aufweist. Diese Anschlußformstücke sind durch starre Leitungsrohrabschnitte miteinander verbunden.

Infolge der Wärmedehnungen im Abgasleitungsstrang, die in einzelnen Strangabschnitten je nach dem Betriebszustand der jeweils angeschlossenen Brenngeräte sehr unterschiedlich sein können, treten Längenänderungen des Abgasleitungsstrangs auf. Aus den genannten Gründen können diese durch Wärmedehnung verursachten Längenänderungen bei unterschiedlichen Betriebszuständen der angeschlossenen Brenngeräte unterschiedlich sein.

Diese Längenänderungen im Abgasleitungsstrang führen zu Verlagerungen der Anschlußformstücke in Längsrichtung des Abgasleitungsstrangs. Dies macht es erforderlich, die Anschlußrohre der Brenngeräte so anzuschließen, daß sie sich innerhalb der jeweils zugeordneten Anschlußöffnung im Leitungsschacht ausreichend verlagern können. Wird diese Notwendigkeit nicht in ausreichendem Maße berücksichtigt, so kann es zu Verspannungen im Abgasleitungsstrang und/oder zu Beschädigungen bis hin zu Undichtheiten an den angeschlossenen Leitungen kommen.

Aufgabe der Erfindung ist es daher, eine Abgasanlage der eingangs genannten Gattung so auszubilden, daß jegliche Beeinträchtigungen infolge von unterschiedlichen Wärmedehnungen ausgeschlossen sind.

Diese Aufgabe wird erfindungsgemäß dadurch gelöst, daß zwischen aufeinander folgenden Anschlußformstücken jeweils ein flexibler Faltenbalgkompensator im Abgasleitungsstrang angeordnet ist.

Der Faltenbalgkompensator gleicht alle Wärmedehnungen aus, die zwischen einem Anschlußformstück und dem jeweils nächsten oberen oder unteren Anschlußformstück auftreten. Damit wird es ermöglicht, jedes Anschlußformstück in der für den Anschluß des Brenngeräts jeweils optimalen Stellung anzuordnen und festzulegen. Das Anschlußformstück behält im Betrieb diese Stellung unverändert bei und wird nicht durch im Abgasleitungsstrang auftretende Wärmedehnungen verlagert.

Bereits bei der Montage der Abgasanlage kann mit wesentlich größeren Längentoleranzen der verwendeten Leitungsrohrabschnitte gearbeitet werden, weil Toleranzabweichungen in einem weiten Bereich durch die Faltenbalgkompensatoren ausgeglichen werden. Damit werden sowohl die Vorbereitung der Teile der Abgasanlage als auch deren Montage wesentlich vereinfacht.

Vorzugsweise ist der Faltenbalgkompensator jeweils unter einem Anschlußformstück angeordnet.

Gemäß einer bevorzugten Ausführungsform der Erfindung ist vorgesehen, daß der Faltenbalgkompensator im wesentlichen aus flexibel miteinander verbundenen konischen Balgringen besteht. Jede Balgring bildet vorzugsweise ein bistabiles elastisches Element. Damit wird erreicht, daß der Faltenbalgkompensator in jeder vorgegebenen Länge einen stabilen Zustand ohne wesentliche elastische Längskräfte einnimmt. Jeder konische Balgring hat zwei stabile Stellungen, so daß benachbarte Balgringe entweder in einem angenähert vorgegebenen Winkel zueinander angeordnet sind, wobei mehrere Balgringe einen Faltenbalg bilden, oder flach aneinander liegen und einen Block von Balgringen bilden.

Die jeweils wirksame Länge eines Faltenbalgkompensators ergibt sich daraus, welcher Anteil seiner Balgringe in dieser genannten Weise einen Faltenbalg oder einen Block bilden. Durch Aufbringen von Zugkräften oder Druckkräften in Längsrichtung kann diese wirksame Länge des Faltenbalgkompensators verändert werden.

Nachfolgend wird ein Ausführungsbeispiel der Erfindung näher erläutert, das in der Zeichnung dargestellt ist. Es zeigt:
Fig. 1 in einem Längsschnitt eine Abgasanlage für ein Gebäude mit Mehrfachbelegung durch mehrere Brenngeräte,
Fig. 2 in vergrößerter Darstellungsweise eine Einzelheit am Anschluß eines Brenngeräts und
Fig. 3 in weiter vergrößerter Darstellung und teilweise im Schnitt einen der in der Abgasanlage nach Fig. 1 verwendeten Faltenbalgkompensatoren.

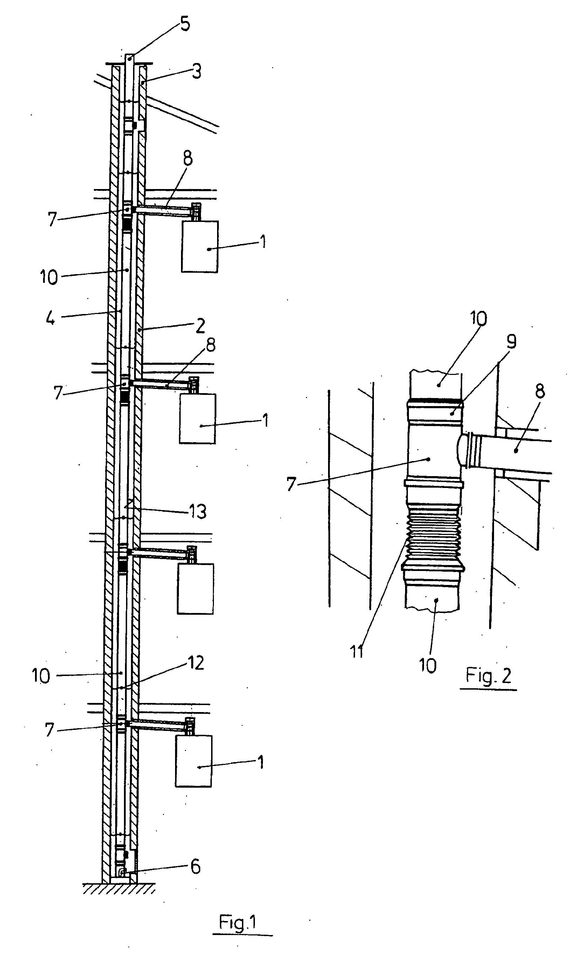

Die in Fig. 1 gezeigte Abgasanlage für Gebäude ist für eine Mehrfachbelegung durch mehrere angeschlossene Brenngeräte 1, beispielsweise Heizungskessel, in unterschiedlichen Stockwerken des Gebäudes bestimmt. In einem Leitungsschacht 2 des Gebäudes, der bis zu einem Schachtkopf 3 über das Dach hinausgeführt ist, ist ein aus Kunststoff bestehender Abgasleitungsstrang 4 angeordnet, der eine Austrittsöffnung 5 über dem Schachtkopf 3 und an seinem unteren Ende einen Kondensatsammelsumpf 6 aufweist.

Der Abgasleitungsstrang 4 weist mehrere, jeweils als T-Stück ausgeführte Anschlußformstücke 7 (Fig. 2) auf, an die seitlich jeweils ein Anschlußrohr 8 des jeweils zugeordneten Brenngeräts 1 angeschlossen ist.

Oberhalb jedes Anschlußformstücks 7 ist über eine Muffenverbindung 9 ein Leitungsrohrabschnitt 10 aus Kunststoffrohr angeschlossen, der an seinem oberen Ende jeweils über einen flexiblen Faltenbalgkompensator 11 mit dem darüber befindlichen, nächsten Anschlußformstück 7 verbunden ist.

In Fig. 1 nur angedeutete Abstandshalter 12 sind zwischen dem Leitungsrohrabschnitt 10 und der mit Abstand umgebenden Schachtinnenwand 13 angeordnet. Nicht dargestellte Träger tragen den Leitungsrohrabschnitt 10 mit dem angeschlossenen Anschlußformstück 7. Der Abgasleitungsstrang 4 kann auch vom Schachtkopf 3 abgehängt sein.

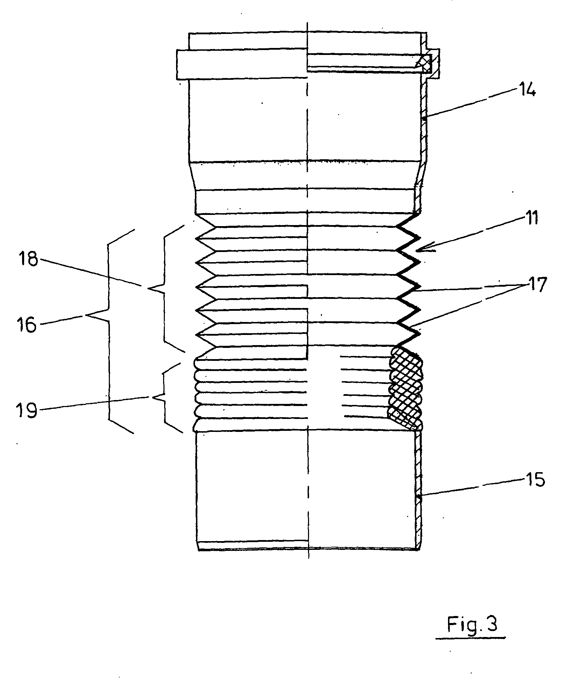

Wie in Fig. 3 dargestellt, weist jeder Faltenbalgkompensator 11 zwischen einer Anschlußmuffe 14 und einem Anschlußstutzen 15 einen flexiblen Faltenbalgabschnitt 16 auf, der im wesentlichen aus flexibel miteinander verbundenen konischen Balgringen 17 aus Kunststoff besteht. Jeder Balgring 17 bildet ein bistabiles elastisches Element. Benachbarte Balgringe 17 können daher entweder in einem im wesentlichen vorgegebenen Winkel zueinander angeordnet sein, wie dies in Fig. 3 in einem Bereich 18 dargestellt ist, wobei die Balgringe 17 einen elastischen Faltenbalg bilden, oder die Balgringe können im wesentlichen flach aufeinander liegen und in einem Abschnitt 19 einen axial im wesentlichen starren Block bilden.

Die wirksame Länge des Faltenbalgkompensators 11 kann bei der Montage in sehr einfacher Weise dadurch bestimmt werden, daß in axialer Richtung eine Zugkraft oder Druckkraft auf den Faltenbalgkompensator 11 ausgeübt wird, so daß ein mehr oder weniger großer Anteil seiner Balgringe 17 aus der Faltenbalganordnung wie im Bereich 18 in die Blockanordnung wie im Bereich 19 und umgekehrt übergeht. Der Faltenbalgkompensator 11 ist in jeder der gewählten Längen im wesentlichen stabil, läßt jedoch eine axiale Längenänderung durch elastische Verformungen zu.

## Patentansprüche

1. Abgasanlage für Gebäude mit Mehrfachbelegung durch mehrere, in unterschiedlichen Stockwerken angeschlossene Brenngeräte, mit einem aus Kunststoff bestehenden, in einem Leitungsschacht des Gebäudes angeordneten Abgasleitungsstrang, der mehrere Anschlußformstücke zum Anschluß jeweils eines Brenngeräts und mehrere, jeweils zwischen zwei Anschlußformstücken angeordnete Leitungsrohrabschnitte aufweist, **dadurch gekennzeichnet, daß** zwischen aufeinander folgenden Anschlußformstücken (7) jeweils ein flexibler Faltenbalgkompensator (11) im Abgasleitungsstrang (4) angeordnet ist.

2. Abgasanlage nach Anspruch 1, **dadurch gekennzeichnet, daß** der Faltenbalgkompensator (11) jeweils unter einem Anschlußformstück (7) angeordnet ist.

3. Abgasanlage nach Anspruch 1, **dadurch gekennzeichnet, daß** der Faltenbalgkompensator (11) im wesentlichen aus flexibel miteinander verbundenen Balgringen (17) besteht.

4. Abgasanlage nach Anspruch 3, **dadurch gekennzeichnet, daß** jeder Balgring (7) ein bistabiles elastisches Element bildet.
